# EUROPÄISCHE PATENTSCHRIFT

(11) **EP 2 018 346 B1**
(45) Veröffentlichungstag und Bekanntmachung des Hinweises auf die Patenterteilung: **11.07.2018**
(21) Anmeldenummer: 07724769.0
(22) Anmeldetag: 02.05.2007
(51) Int. Cl.: D04H 3/14, D04H 11/00, D06N 7/00, D05C 17/02, D04H 5/06, B68G 11/02, D04H 3/12, B01D 39/16, B43K 8/04

(54) **VLIESSTOFF, GETUFTETER VLIESSTOFF UND DIE STOFFE ENTHALTENDE ERZEUGNISSE**
NONWOVEN, TUFTED NONWOVEN AND PRODUCTS CONTAINING THE FABRICS
TISSU NON TISSE, TISSU NON TISSE TOUFFETE ET ARTICLES CONTENANT CE TISSU

(30) Priorität: 10.05.2006 DE 202006007567 U
(43) Veröffentlichungstag der Anmeldung: 28.01.2009
(73) Patentinhaber: Low & Bonar B.V., 6827 AV Arnhem (NL)
(72) Erfinder: DIJKEMA, Jan, 7207 GC Zutphen (NL); VISSCHER, Edze Jan, 3544 MC Utrecht (NL)
(74) Vertreter: Oberlein, Gerriet H. R.
(86) Internationale Anmeldenummer: PCT/EP2007/003843
(87) Internationale Veröffentlichungsnummer: WO 2007/128466

(56) Entgegenhaltungen:
- WO-A-03/069039
- WO-A-2006/079511
- DE-A1- 3 642 089
- JP-A- 11 309 063
- US-A- 3 940 302
- US-A- 4 210 690
- US-A- 5 660 910
- US-A- 5 851 355
- US-A1- 2004 151 870
- US-A1- 2005 159 064
- US-B2- 6 582 639

## Beschreibung

Die vorliegende Erfindung betrifft einen Vliesstoff, einen getufteten Vliesstoff und die Stoffe enthaltende Erzeugnisse.

WO 00/12800 beschreibt einen primären Vlies-Teppichrücken umfassend thermoplastische Polymerfäden oder -fasern, die mit Hilfe eines Binderpolymers gebunden sind, wobei der Teppichrücken mindestens eine unterscheidbare thermoplastische gewebte Schicht, eine unterscheidbare thermoplastische durchgehende Schicht oder eine unterscheidbare Vliesschicht umfasst, welche ebenfalls Filamente oder Fasern umfasst, die mit Hilfe eines Binderpolymers gebunden sind. Wenn dieser primäre Teppichrücken getuftet wird, beobachtet man einen Anstieg der Stichsicherung, jedoch verbunden mit einer verringerten Abschälfestigkeit.

US 5,851,355 A beschreibt ein auf einer Papiermaschine in einem Nasslege-Verfahren hergestelltes Vliesträgersubstrat. Das Vliesträgersubstrat umfasst Stapelfasern mit einem Titer, der größer als 0,22 dtex aber kleiner als 1,1 dtex ist, Stapelfasern mit einem Titer, der größer als 1,1 dtex aber kleiner als 3,3 dtex ist, eine erste Bindefaser und ein zweite Bindefaser. Die Stapelfasern sind aus Polyester hergestellt. Die Bindefasern sind Copolymer/Polymer-Bikomponentenfasern.

US 6,582,639 B2 beschreibt eine Dachinnenverkleidung für Automobile, wobei die Dachinnenverkleidung ein Paneel umfasst. Das Paneel ist aus einem Vliesstoff aus thermoplastischen polymeren Fasern geformt, wobei die Fasern zwei Bindefasern enthalten können. Die Fasern sind Stapelfasern mit einer gewünschten Länge von ca. 25 bis 125 mm.

US 4,210,690 A beschreibt einen Vliesstoff aus Polyesterfilamenten zur Verwendung als Träger für einen getufteten Teppich. In einem Beispiel wird ein getufteter Vliesstoff beschrieben, der aus aus 80 Gew.-% Polyesterfilamenten und aus 20 Gew.-% Bindefilament besteht.

US 3,940,302 beschreibt einen Vliesstoff zur Verwendung als Träger für einen getufteten Teppich der aus eine Mischung aus Polypropylenfilamenten und aus Bikomponenten Filamenten mit ein Kern aus Polypropylen und mit einem Mantel aus Copolyamid besteht. Zusätzlich enthalt der Vliesstoff parallele Garne in Längsrichtung bestehend aus Bikomponenten Kern-Mantel Filamenten mit einem Mantel aus Copolyamid.

US 2004/151870 A1 beschreibt einen Teppich umfassend einen zweiteiligen Träger.

Daher stellt sich die vorliegende Erfindung die Aufgabe, einen Vliesstoff zur Verfügung zu stellen, der nach dem Tuften einen getufteten Vliesstoff mit erhöhter Stichsicherung jedoch ohne verringerte Abschälfestigkeit ergibt.

Diese Aufgabe wird zum einen gelöst durch einen Vliesstoff umfassend thermoplastische Fasern mit einem Schmelzpunkt Tₘ(th), Bindefasern 1 mit einem Schmelzpunkt Tₘ(1) und Bindefasern 2 mit einem Schmelzpunkt Tₘ(2), wobei für Tₘ(th), Tₘ(1) und Tₘ(2) die Bedingung Tₘ(th) > Tₘ(1) > Tₘ(2) gilt, wobei der Vliesstoff die Bindefasern als verfestigte Schmelze enthält, wobei die thermoplastischen Fasern Monofilamente oder Multifilamente sind, und wobei der Vliesstoff kein Laminat darstellt.

Der erfindungsgemäße Vliesstoff weist ein hohes Maß an Aufrechterhaltung seiner Strukturintegrität auf, weil die verfestige Schmelze der Bindefasern die thermoplastischen Fasern verbindet und dadurch die Vliesstruktur stabilisiert. Ferner weist der erfindungsgemäße Vliesstoff keinerlei Probleme bezüglich Delamination auf, weil der erfindungsgemäße Vliesstoff kein Laminat darstellt.

Im Rahmen der vorliegenden Erfindung hat der Begriff "Vliesstoff" die dem Fachmann bekannte Bedeutung. Beispielhaft seien die z.B. in Joachim Lünenschloß und Wilhelm Albrecht "Vliesstoffe", Georg Thieme Verlag Stuttgart · New York (1982), Kapitel 2.1.1.1-2 beschriebenen Spinnfaservliese und Spinnvliesstoffe aus Filamenten genannt.

Im Rahmen der vorliegenden Erfindung ist der Begriff "thermoplastische Fasern" in seinem breitesten Sinn zu verstehen und umfasst daher thermoplastische Mono- und Multifilamente, sofern ihr Schmelzpunkt Tₘ(th) die Be-dingung Tₘ(th) > Tₘ(1) > Tₘ(2) erfüllt. Es versteht sich von selbst, dass die thermoplastischen Fasern jene Anforderungen hinsichtlich Festigkeit, Bruchdehnung, Modul, Formbarkeit, Dimensionsstabilität usw. erfüllen, die benötigt werden, um damit einen Vliesstoff herzustellen. Ferner können die erfindungsgemäß eingesetzten thermoplastischen Fasern Spinnhilfsmittel, Füller, Flammschutzmittel, UV-Inhibitoren, Kristallisierhilfsmittel, Weichmacher, Beschleuniger/Verzögerer, Hitzestabilisatoren, antimikrobielle Additive oder Kombinationen der genannten Stoffe in solch einer Menge enthalten, dass die vorstehend genannten Anforderungen an die thermoplastischen Fasern noch erfüllt werden.

In einer bevorzugten Ausführungsform umfasst der erfindungsgemäße Vliesstoff thermoplastische Fasern, die ein thermoplastisches Polymer umfassen, das ausgewählt ist aus der Gruppe bestehend aus Polyethylenterephthalat, Polypropylen, Polyamid, Polybutylenterephthalat, Polytrimethylenterephthalat, Polyphenylensulfid, Polyethylennaphthalat, Polyethylenimid, Polymilchsäure und Polyoxymethylen.

Im Rahmen der vorliegenden Erfindung bedeutet der Begriff "Bindefasern" Fasern, die - eingearbeitet in den erfindungsgemäßen Vliesstoff - in der Lage sind, eine verfestigte Schmelze zu bilden, welche die thermoplastischen Fasern des erfindungsgemäßen Vliesstoffs verbindet und dadurch die Struktur des Vliesstoffs stabilisiert. Somit können im Rahmen der vorliegenden Erfindung als Bindefasern jede Art von Fasern dienen, welche die obengenannte Bedingung erfüllen, wobei die höher schmelzenden Bindefasern 1 einen Schmelzpunkt unterhalb des Schmelzpunktes der thermoplastische Fasern aufweisen. Derartige Fasern können aus einen großen Vielzahl von Stoffklassen ausgewählt werden, sofern sie die vorstehend genannten Bedingungen erfüllen. Die Bindefasern sind üblicherweise Synthesefasern, die organische Polymere umfassen, wie etwa Thermoplaste, Elastomere oder thermoplastische Elastomere. Die Bindefasern können bioabbaubar sein.

In einer bevorzugten Ausführungsform umfasst der erfindungsgemäße Vliesstoff Bindefasern 1, die ein thermoplastisches Polymer umfassen, das ausgewählt ist aus der Gruppe bestehend aus Polyamid, Polypropylen, Polyethylen oder Copolymere hiervon, Polybutylenterephthalat, Polymilchsäure, aliphatischen Polyestern, Copolyamiden und Copolyestern.

In einer weiteren bevorzugten Ausführungsform umfasst der erfindungsgemäße Vliesstoff Bindefasern 2, die ein thermoplastisches Polymer umfassen, das ausgewählt ist aus der Gruppe bestehend aus Polypropylen, Polyethylen oder Copolymeren hiervon, Polymilchsäure, Polyvinylchlorid, Copolyamiden und Copolyestern.

Im Rahmen der vorliegenden Erfindung bedeutet der Begriff "verfestigte Schmelze", dass der erfindungsgemäße Vliesstoff die Bindefasern 1 und 2 in einer verfestigen Form enthält, welche dadurch erhalten wurde, dass eine Wirrlage umfassend die thermoplastischen Fasern, die Bindefasern 1 und die Bindefasern 2 auf eine Temperatur zur Vliesstoffherstellung Tᵥ erwärmt wurde, die der Bedingung Tₘ(th) > Tᵥ > Tₘ(1) gehorcht, wonach die vorstehend beschriebene Wirrlage auf eine Temperatur abgekühlt wurde, bei der auch das die Bindefasern 2 bildende Polymer verfestigt ist.

In einer weiteren bevorzugten Ausführungsform des erfindungsgemäßen Vliesstoffs ist der Schmelzpunkt der Bindefasern 1 Tₘ(1) mindestens 5 °C, besonders bevorzugt mindestens 10 °C und ganz besonders bevorzugt mindesten 20 °C höher ist als der Schmelzpunkt der Bindefasern 2 Tₘ(2).

Für den erfindungsgemäßen Vliesstoff gilt ferner, dass vorzugsweise der Schmelzpunkt der thermoplastischen Fasern Tₘ(th) mindestens 20°C höher ist als der Schmelzpunkt der Bindefasern 1 Tₘ(1).

In einer bevorzugten Ausführungsform des erfindungsgemäßen Vliesstoffs umfassen die thermoplastischen Fasern Polyethylenterephthalat mit einem Schmelzpunkt Tₘ(th) = 250 °C und die Bindefasern 1 Polyamid 6 mit einen Schmelzpunkt Tₘ(1) = 220°C.

In einer besonders bevorzugten Ausführungsform des erfindungsgemäßen Vliesstoffs umfassen die thermoplastischen Fasern Polyethylenterephthalat mit einem Schmelzpunkt Tₘ(th) = 250 °C, die Bindefasern 1 Polyamid 6 mit einen Schmelzpunkt Tₘ(1) = 220 °C und die Bindefasern 2 Polypropylen mit einen Schmelzpunkt Tₘ(2) = 160 °C.

Im erfindungsgemäßen Vliesstoff kann das Gewichtsverhältnis von thermoplastischen Fasern w(th), Bindefasern 1 w(1) und Bindefasern 2 w(2) in einem weiten Bereich eingestellt werden, wobei der Anteil der Bindefasern 1 und 2 umso höher gewählt wird, je größer die Anforderungen an die Strukturintegrität des Vliesstoffs unten den beabsichtigten Verwendungsbedingungen sind. Vorzugsweise liegt das Verhältnis w(th) : w(1) : w(2) in einem Bereich von 90 :5 : 5 bis 40 : 30 : 30 Gewichts-%, besonders bevorzugt in einem Bereich von 80 : 10 : 10 bis 60 : 20 : 20 Gewichts-%.

Zur Herstellung des erfindungsgemäßen Vliesstoffs werden die thermoplastischen Fasern, die Bindefasern 1 und die Bindefasern 2 in einer der dem Fachmann bekannten Verfahren gemischt und eine Wirrlage erzeugt, wobei das gewählte Mischverfahren in der Lage ist, eine ausreichend homogene Mischung der thermoplastischen Fasern und der Bindefasern 1 und 2 in der Wirrlage zu gewährleisten. Dabei bedeutet der Begriff "homogene Mischung", dass in jedem Volumenelement der Wirrlage das Verhältnis w(th) : w(1) : w(2) in etwa gleich ist. Vorzugsweise dient als Mischverfahren das Assemblieren oder das Mischen an einem Spulengatter oder das Spinnen aus 3-Komponenten Spinnbalken.

Zur Herstellung der Wirrlage kann jedes der zu diesem Zweck bekannten Verfahren eingesetzt werden, z.B. die Verfahren, die in Kapitel 10.1 des "Manual of nonwovens" (1971), Textile Trade Press, Manchester, England in association with W.R.C. Publishing Co., Atlanta, U.S.A. beschrieben sind.

Die Wirrlage wird auf eine Temperatur zur Vliesstoffherstellung Tᵥ erwärmt, die der Bedingung Tₘ(th) > Tᵥ > Tₘ(1) gehorcht, wonach die Wirrlage auf eine Temperatur abgekühlt wurde, bei der auch das die Bindefasern 2 bildende Polymer verfestigt wird, wodurch der erfindungsgemäße Vliesstoff erhalten wird. Die Zeit, während der Tᵥ auf die Wirrlage einwirkt, wird so gewählt, dass eine Menge an Bindefasern 1 und 2 schmelzen kann, die ausreicht, dass nach dem Abkühlen eine verfestigte Schmelze entsteht, welche die thermoplastischen Fasern verbindet.

In einer bevorzugten Ausführungsform ist der Vliesstoff ein getufteter Vliesstoff umfassend thermoplastische Fasern mit
einem Schmelzpunkt Tₘ(th), Bindefasern 1 mit einem Schmelzpunkt Tₘ(1) und Bindefasern 2 mit einem Schmelzpunkt Tₘ(2), wobei für Tₘ(th), Tₘ(1) und Tₘ(2) die Bedingung Tₘ(th) > Tₘ(1) > Tₘ(2) gilt, wobei der Vliesstoff die Bindefasern als verfestigte Schmelze enthält, wobei die thermoplastischen Fasern Monofilamente oder Multifilamente sind, wobei der Vliesstoff kein Laminat darstellt, wobei der getuftete Vliesstoff Tuftfäden enthält, die ggf. mit einer verfestigten Schmelze der Bindefasern 2 an die thermoplastischen Fasern gebunden sind.

Dabei gilt für die Begriffe "Vliesstoff", "thermoplastische Fasern", "Bindefasern 1 und 2", "verfestigte Schmelze" und für deren bevorzugten Ausführungsformen sinngemäß das bereits bei der Beschreibung des erfindungsgemäßen Vliesstoffs Ausgeführte.

Der Begriff "Tuftfäden" beinhaltet im Rahmen der vorliegenden Erfindung grundsätzliche alle Fäden, die als Tuftfäden eingesetzt werden können, sofern der Schmelz- bzw. Zersetzungspunkt dieser Fäden höher ist als die im folgenden Absatz definierte Temperatur Tₜ.

Zur Herstellung des erfindungsgemäßen getufteten Vliesstoffs wird der erfindungsgemäße Vliesstoff mit einem dem Fachmann bekannten Verfahren getuftet. Anschließend kann der getuftete Vliesstoff auf eine Temperatur Tₜ erwärmt werden, welche die Bedingung Tₘ(1) > Tₜ > Tₘ(2) erfüllt, wodurch das die Bindefäden 2 bildende Material aufschmilzt. Nach dem Abkühlen auf eine Temperatur, bei der das die Bindefasern 2 bildende Polymer verfestigt wird, resultiert eine verfestigte Schmelze der Bindefasern 2, welche die Tuftfäden an die thermoplastischen Fäden bindet.

In einer bevorzugten Ausführungsform des erfindungsgemäßen getufteten Vliesstoffs bestehen die Tuftfäden aus einem Material, das ausgewählt ist aus der Gruppe bestehend aus Polyamid, Polypropylen, Polymilchsäure, Wolle und Baumwolle.

Der erfindungsgemäße getuftete Vliesstoff weist eine ausgezeichnete Stichsicherung auf. Dies gilt insbesondere dann, wenn die Tuftfäden mit einer verfestigten Schmelze der Bindefasern 2 an die thermoplastischen Fasern gebunden sind.

Die hohe Dimensionsstabilität und Strukturintegrität des erfindungsgemäßen Vliesstoffs macht sich in einer Vielzahl von Erzeugnissen vorteilhaft bemerkbar, welche den erfindungsgemäßen Vliesstoff enthalten und bei denen es auf die genannten Eigenschaften ankommt.

Dazu gehören Filter für technische und medizinische Anwendungen, welche den erfindungsgemäßen Vliesstoff enthalten. Derartige Filter gehören ebenfalls zur vorliegenden Erfindung und können in technischen Anwendungsfeldern z.B. als Staub-, Ruß-, Pollen- oder Gasfilter oder in medizinischen Anwendungsfeldern z.B. als Bakterien- oder Virenfilter oder als Filter zum Austausch von Wärme und Feuchtigkeit ausgeführt sein. In der zuletzt genannten Ausführungsform nimmt der erfindungsgemäße Filter aus der Ausatemluft eines Patienten Wärme und Feuchtigkeit auf. Für diese Ausführungsform des erfindungsgemäßen Filters sind thermoplastische Fasern und Bindefasern geeignet, die eine geringe Wärmeleitfähigkeit und eine hohe Hydrophilie aufweisen, wie z.B. Polyamidfasern.

Ferner gehören zur vorliegenden Erfindung Koaleszenzfilter zur Trennung eines hydrophilen Fluids von einem hydrophoben Fluid, welche einen erfindungsgemäßen Vliesstoff enthalten. Mit einem derartigen Filter lässt sich z.B. Wasser aus Flugbenzin abtrennen. Dies gelingt umso besser, je hydrophiler die thermoplastischen Fasern und die Bindefasern des Vliesstoffs sind, weil mit steigender Hydrophilie die Fähigkeit der Fasern steigt, das Wasser zu binden.

Weiterhin gehört zur vorliegenden Erfindung ein Docht als Speicher beim Transfer von Tinte in Markier- und Schreibgeräten, für medizinische Anwendungen oder für andere Produkte, die Flüssigkeiten halten und transportieren, wobei der Docht einen erfindungsgemäßen Vliesstoff enthält. Für die Dochtwirkung sind insbesondere thermoplastische Fasern und Bindefasern mit einer hohen Oberflächenenergie geeignet, die es den Fasern ermöglicht, das gewünschte Flüssigkeitsvolumen anzusaugen. Daher sind für diese Ausführungsform thermoplastische Fasern und Bindefasern aus Polyethylenterephthalat besser geeignet als solche aus beispielsweise Polyolefinen.

Die hohe Dimensionsstabilität, Strukturintegrität und Stichsicherung des erfindungsgemäßen getufteten Vliesstoffs macht sich in einer Vielzahl von Erzeugnissen vorteilhaft bemerkbar, welche den erfindungsgemäßen getufteten Vliesstoff enthalten und bei denen es auf die genannte Eigenschaftskombination ankommt.

Dazu gehört ein getufteter Teppich für Heimtextilien, Kissen, Polster, Textilien in Automobilen, Zügen oder Flugzeugen und Außenanwendungen wie künstlicher Rasen oder Spielflächen, wobei der getuftete Teppich einen erfindungsgemäßen getufteten Vliesstoff enthält. Ein derartiger Teppich gehört ebenfalls zur vorliegenden Erfindung.

Schließlich gehört zur vorliegenden Erfindung ein geformter Teppich enthaltend einen erfindungsgemäßen getufteten Vliesstoff.

## Patentansprüche

1. Vliesstoff umfassend thermoplastische Fasern mit einem Schmelzpunkt Tₘ(th), Bindefasern 1 mit einem Schmelzpunkt Tₘ(1) und Bindefasern 2 mit einem Schmelzpunkt Tₘ(2), wobei für Tₘ(th), Tₘ(1) und Tₘ(2) die Bedingung Tₘ(th) > Tₘ(1) > Tₘ(2) gilt, wobei der Vliesstoff die Bindefasern als verfestigte Schmelze enthält, **dadurch gekennzeichnet dass** die thermoplastischen Fasern Monofilamente oder Multifilamente sind, und dass der Vliesstoff kein Laminat darstellt.

2. Vliesstoff nach Anspruch 1, **dadurch gekennzeichnet, dass** die thermoplastischen Fasern ein thermoplastisches Polymer umfassen, das ausgewählt ist aus der Gruppe bestehend aus Polyethylenterephthalat, Polypropylen, Polyamid, Polybutylenterephthalat, Polytrimethylenterephthalat, Polyphenylensulfid, Polyethylennaphthalat, Polyethylenimid, Polymilchsäure und Polyoxymethylen.

3. Vliesstoff nach Anspruch 1 oder 2, **dadurch gekennzeichnet, dass** die Bindefasern 1 ein thermoplastisches Polymer umfassen, das ausgewählt ist aus der Gruppe bestehend aus Polyamid, Polypropylen, Polyethylen oder Copolymere hiervon, Polybutylenterephthalat, Polymilchsäure, aliphatischen Polyestern, Copolyamiden und Copolyestern.

4. Vliesstoff nach einem oder mehreren der Ansprüche 1 bis 3, **dadurch gekennzeichnet, dass** die Bindefasern 2 ein thermoplastisches Polymer umfassen, das ausgewählt ist aus der Gruppe bestehend aus Polypropylen, Polyethylen oder Copolymeren hiervon, Polymilchsäure, Polyvinylchlorid, Copolyamiden und Copolyestern.

5. Vliesstoff nach einem oder mehreren der Ansprüche 1 bis 4, **dadurch gekennzeichnet, dass** der Schmelzpunkt der Bindefasern 1 Tₘ(1) mindestens 5 °C höher ist als der Schmelzpunkt der Bindefaser 2 Tₘ(2).

6. Vliesstoff nach einem oder mehreren der Ansprüche 1 bis 5, **dadurch gekennzeichnet, dass** der Schmelzpunkt der thermoplastischen Fasern Tₘ(th) mindestens 20°C höher ist als der Schmelzpunkt der Bindefasern 1 Tₘ(1).

7. Vliesstoff nach einem oder mehreren der Ansprüche 1 bis 6, **dadurch gekennzeichnet, dass** die thermoplastischen Fasern Polyethylenterephthalat mit einem Schmelzpunkt Tₘ(th) = 250 °C und die Bindefaser 1 Polyamid 6 mit einen Schmelzpunkt Tₘ(1) = 220 °C umfassen.

8. Vliesstoff nach Anspruch 7, **dadurch gekennzeichnet, dass** die thermoplastische Fasern Polyethylenterephthalat mit einem Schmelzpunkt Tₘ(th) = 250 °C, die Bindefasern 1 Polyamid 6 mit einen Schmelzpunkt Tₘ(1) = 220 °C und die Bindefasern 2 Polypropylen mit einen Schmelzpunkt Tₘ(2) = 160 °C umfassen.

9. Vliesstoff nach Anspruch 1, wobei der Vliesstoff ein getufteter Vliesstoff ist umfassend thermoplastische Fasern mit einem Schmelzpunkt Tₘ(th), Bindefasern 1 mit einem Schmelzpunkt Tₘ(1) und Bindefasern 2 mit einem Schmelzpunkt Tₘ(2), wobei für Tₘ(th), Tₘ(1) und Tₘ(2) die Bedingung Tₘ(th) > Tₘ(1) > Tₘ(2) gilt, wobei der Vliesstoff die Bindefasern als verfestigte Schmelze enthält, wobei die thermoplastischen Fasern Monofilamente oder Multifilamente sind, wobei der getuftete Vliesstoff Tuftfäden enthält, die ggf. mit einer verfestigten Schmelze der Bindefasern 2 an die thermoplastischen Fasern gebunden sind.

10. Vliesstoff gemäß Anspruch 9, **dadurch gekennzeichnet, dass** die Tuftfäden aus einem Material bestehen, das ausgewählt ist aus der Gruppe bestehend aus Polyamid, Polypropylen, Polymilchsäure, Wolle und Baumwolle.

11. Filter für technische oder medizinische Anwendungen enthaltend einen Vliesstoff gemäß einem oder mehreren der Ansprüche 1 bis 8.

12. Koaleszenzfilter zur Trennung eines hydrophilen Fluids von einem hydrophoben Fluid enthaltend einen Vliesstoff gemäß einem oder mehreren der Ansprüche 1 bis 8.

13. Docht als Speicher beim Transfer von Tinte in Markier- und Schreibgeräten, für medizinische Anwendungen oder für andere Produkte, die Flüssigkeiten halten und transportieren, wobei der Docht einen Vliesstoff gemäß einem oder mehreren der Ansprüche 1 bis 8 enthält.

14. Getufteter Teppich für Heimtextilien, Kissen, Polster, Textilien in Automobilen, Zügen oder Flugzeugen und Außenanwendungen wie künstlicher Rasen oder Spielflächen, wobei der getuftete Teppich einen getufteten Vliesstoff nach Anspruch 9 oder 10 enthält.

15. Geformter Teppich enthaltend einen getufteten Vliesstoff nach Anspruch 9 oder 10.

## Claims

1. Nonwoven comprising thermoplastic fibers with a melting temperature Tₘ(th), bonding fibers 1 with a melting temperature Tₘ(1), and bonding fibers 2 with melting temperature Tₘ(2), wherein the condition Tₘ(th) > Tₘ(1) > Tₘ(2) applies for Tₘ(th), Tₘ(1), and Tₘ(2), wherein the nonwoven contains the bonding fibers as a solidified melt, **characterized in that** the thermoplastic fibers are monofilaments or multifilaments, and that the nonwoven is not a laminate.

2. Nonwoven according to Claim 1, **characterized in that** the thermoplastic fibers comprise a thermoplastic polymer selected from the group consisting of polyethylene terephthalate, polypropylene, polyamide, polybutylene terephthalate, polytrimethylene terephthalate, polyphenylene sulfide, polyethylene naphthalate, polyethylene imide, polylactic acid, and polyoxymethylene.

3. Nonwoven according to Claim 1 or 2, **characterized in that** the bonding fibers 1 comprise a thermoplastic polymer selected from the group consisting of polyamide, polypropylene, polyethylene or copolymers thereof, polybutylene terephthalate, polylactic acid, aliphatic polyesters, copolyamides, and copolyesters.

4. Nonwoven according to one or more of Claims 1 to 3, **characterized in that** the bonding fibers 2 comprise a thermoplastic polymer selected from the group consisting of polypropylene, polyethylene or copolymers thereof, polylactic acid, polyvinyl chloride, copolyamides, and copolyesters.

5. Nonwoven according to one or more of Claims 1 to 4, **characterized in that** the melting temperature Tₘ(1) of the bonding fibers 1 is at least 5°C higher than the melting temperature Tₘ(2) of the bonding fibers 2.

6. Nonwoven according to one or more of Claims 1 to 5, **characterized in that** the melting temperature of the thermoplastic fibers Tₘ(th) is at least 20°C higher than the melting temperature Tₘ(1) of the bonding fibers 1.

7. Nonwoven according to one or more of Claims 1 to 6, **characterized in that** the thermoplastic fibers comprise polyethylene terephthalate with a melting temperature Tₘ(th) = 250°C, and the bonding fibers 1 comprise polyamide 6 with a melting temperature Tₘ(1) = 220°C.

8. Nonwoven according to Claim 7, **characterized in that** the thermoplastic fibers comprise polyethylene terephthalate with a melting temperature Tₘ(th) = 250°C, the bonding fibers 1 comprise polyamide 6 with a melting temperature Tₘ(1) = 220°C, and the bonding fibers 2 comprise polypropylene with a melting temperature Tₘ(2) = 160°C.

9. Nonwoven according to Claim 1, wherein the nonwoven is a tufted nonwoven comprising thermoplastic fibers with a melting temperature Tₘ(th), bonding fibers 1 with a melting temperature Tₘ(1), and bonding fibers 2 with a melting temperature Tₘ(2), wherein the condition Tₘ(th) > Tₘ(1) > Tₘ(2) applies for Tₘ(th), Tₘ(1), and Tₘ(2), wherein the nonwoven contains the bonding fibers as a solidified melt, wherein the thermoplastic fibers are monofilaments or multifilaments, and wherein the tufted nonwoven contains tuft fibers that are bonded by means of a solidified melt of bonding fibers 2 to the thermoplastic fibers, if necessary.

10. Nonwoven according to Claim 9, **characterized in that** the tuft fibers consist of a material selected from the group consisting of polyamide, polypropylene, polylactic acid, wool, and cotton.

11. Filter for industrial or medical applications containing a nonwoven according to one or more of Claims 1 to 8.

12. Coalescence filter for separating a hydrophilic fluid from a hydrophobic fluid containing a nonwoven according to one or more of Claims 1 to 8.

13. Wick used as a repository for the transfer of ink in marking and writing utensils, for medical applications, or for other products that hold and transport fluids, wherein the wick comprises a nonwoven according to one or more of Claims 1 to 8.

14. Tufted carpet for home textiles, pillows, cushions, textiles in automobiles, trains, or airplanes, and exterior applications such as artificial turf or playing surfaces, wherein the tufted carpet comprises a tufted nonwoven according to Claim 9 or 10.

15. Formed carpet containing a tufted nonwoven according to Claim 9 or 10.

## Revendications

1. Non-tissé comprenant des fibres thermoplastiques dotées d'un point de fusion Tₘ (th), des fibres de liaison (1) dotées d'un point de fusion Tₘ (1) et des fibres de liaison (2) dotées d'un point de fusion Tₘ (2), la relation Tₘ (th) > Tₘ (1) > Tₘ (2) s'appliquant à Tₘ (th) à Tₘ (1) et à Tₘ (2), le non-tissé contenant les fibres de liaison sous la forme d'un matériau fondu solidifié, **caractérisé en ce que** les fibres thermoplastiques sont des monofilaments ou des multifilaments et **en ce que** le non-tissé ne présente pas de lamellé.

2. Non-tissé selon la revendication 1 **caractérisé en ce que** les fibres thermoplastiques comportent un polymère thermoplastique qui est choisi dans le groupe constitué du poly(téréphtalate d'éthylène), du polypropylène, du polyamide, du poly (téréphtalate de butylène), du poly(téréphtalate de triméthylène), du poly(sulphure de phénylène), du poly(naphtalate d'éthylène), du poly(imide d'éthylène), de l'acide poly(lactique) et du polyoxyméthylène.

3. Non-tissé selon la revendication 1 ou 2 **caractérisé en ce que** les fibres de liaison (1) comportent un polymère thermoplastique qui est choisi dans le groupe constitué du polyamide, du polypropylène, du polyéthylène ou de copolymères de ces composés, du poly(téréphtalate d'éthylène), de l'acide polylactique, de polyesters aliphatiques, de copolyamides et de copolyesters.

4. Non-tissé selon une ou plusieurs des revendications 1 à 3 **caractérisé en ce que** les fibres de liaison (2) comportent un polymère thermoplastique qui est choisi dans le groupe constitué du polypropylène, du polyéthylène ou de copolymères de ces composés, de l'acide polylactique, du polychlorure de vinyle, de copolyamides et de copolyesters.

5. Non-tissé selon une ou plusieurs des revendications 1 à 4 **caractérisé en ce que** le point de fusion des fibres de liaison (1) Tₘ (1) est d'au moins 5°C plus élevé que le point de fusion des fibres de liaison (2) Tₘ (2).

6. Non-tissé selon une ou plusieurs des revendications 1 à 5 **caractérisé en ce que** le point de fusion des fibres thermoplastiques Tₘ (th) est d'au moins 20°C plus élevé que le point de fusion des fibres de liaison (1) Tₘ (1).

7. Non-tissé selon une ou plusieurs des revendications 1 à 6 **caractérisé en ce que** les fibres thermoplastiques comportent du poly(téréphtalate d'éthylène) doté d'un point de fusion Tₘ (th) = 250°C et **en ce que** les fibres de liaison (1) comportent du polyamide (6) doté d'un point de fusion Tₘ (1) = 220°C.

8. Non-tissé selon la revendication 7 **caractérisé en ce que** les fibres thermoplastiques comportent du poly(téréphtalate d'éthylène) doté d'un point de fusion Tₘ (th) = 250°C, **en ce que** les fibres de liaison (1) comportent du polyamide (6) doté d'un point de fusion Tₘ (1) = 220°C et **en ce que** les fibres de liaison (2) comportent du polypropylène doté d'un point de fusion Tₘ (2) = 160°C.

9. Non-tissé selon la revendication 1, le non-tissé étant un non tissé touffeté comportant des fibres thermoplastique dotées d'un point de fusion Tₘ (th), des fibres de liaison (1) dotées d'un point de fusion Tₘ (1) et des fibres de liaison Tₘ (2) dotées d'un point de fusion Tₘ (2), la relation Tₘ (th) > Tₘ (1) > Tₘ (2) étant appliquée à Tₘ (th), Tₘ (1) et Tₘ (2), le non-tissé contenant les fibres de liaison sous la forme d'un matériau fondu solidifié, les fibres thermoplastiques étant des monofilaments ou des multifilaments, le non-tissé touffeté contenant des fils de touffetage qui sont liés aux fibres thermoplastiques le cas échéant par un matériau fondu solidifié des fibres de liaison (2) thermoplastiques (2).

10. Non-tissé selon la revendication 9 **caractérisé en ce que** les fils de touffetage sont constitués d'un matériau qui est choisi dans le groupe constitué du polyamide, du polypropylène, de l'acide polylactique, de la laine et du coton.

11. Filtre destiné à des utilisations techniques ou médicales contenant un non-tissé selon une ou plusieurs des revendications 1 à 8.

12. Filtre de coalescence destiné à la séparation d'un fluide hydrophile d'avec un fluide hydrophobe renfermant un non-tissé selon une ou plusieurs des revendications 1 à 8.

13. Mèche servant de réservoir lors du transfert d'encre dans des appareils de marquage ou d'écriture, destinée à des applications médicales ou à d'autres produits qui contiennent et transportent des liquides, cette mèche contenant un non-tissé selon une ou plusieurs des revendications 1 à 8.

14. Tapis touffeté destiné à des textiles d'ameublement, des coussins, des sièges comportant un rembourrage, des textiles pour les automobiles, les trains ou les avions et à des utilisations à l'extérieur telles que le gazon artificiel ou les surfaces de jeu, le tapis touffeté contenant un non-tissé touffeté selon la revendication 9 ou 10.

15. Tissu de forme contenant un non-tissé touffeté selon la revendication 9 ou 10.
